# EUROPEAN PATENT APPLICATION

(11) **EP 4 647 663 A1**
(43) Date of publication of application: **12.11.2025**
(21) Application number: 25175862.9
(22) Date of filing: 12.05.2025
(51) Int. Cl.: F23R 3/06, F02C 3/14, F02C 7/224, F23R 3/52

(54) **SUPER COMPACT COMBUSTOR**

(30) Priority: 10.05.2024 US 202463645514 P
(71) Applicant: RTX Corporation, Farmington, CT 06032 (US)
(72) Inventor: SNYDER, Timothy, East Hartford, 06118 (US); BINEK, Lawrence, East Hartford, 06118 (US)
(74) Representative: Dehns

(57) **Abstract**

A gas turbine engine (100a) include a compressor, a combustor (104) positioned fluidically and physically downstream of the compressor (102), a turbine (108) positioned downstream of the combustor (104), and a shaft (110) mechanically connecting the turbine (108) and the compressor (102). The combustor (104) is fluidically connected to the compressor (102) to receive a first portion of the compressed air (130) as combustor primary inlet air (130a) and also includes a toroidal recirculation zone configured to receive and combust fuel in a rich combustion zone (104a), an ignitor (118) positioned to ignite an air/fuel mixture in the rich combustion zone (104a), a rapid quench zone (104b) downstream of the toroidal recirculation zone, a lean combustion zone (104c) downstream of the rapid quench zone (104b), and a cooling air flow path (124).

## Description

The invention relates generally to a gas turbine engine combustor and, more particularly, a gas turbine engine combustor with integral features that are suitable for construction using additive manufacturing processes.

For certain small gas turbine engines, it is desirable to improve designs to provide lower cost, smaller size, high altitude relight capability, improved operability and lean blow out (i.e., flame stability) characteristics, and enhanced operational life. In addition, thoughtful design can ensure that key portions of such gas turbine engines can be made using additive manufacturing processes.

### SUMMARY

One aspect of the invention is directed to a gas turbine engine including a compressor configured to receive inlet air at a compressor inlet and generate compressed air at a compressor exit, a combustor positioned fluidically and physically downstream of the compressor, a turbine positioned fluidically and physically downstream of the combustor, and a shaft mechanically connecting the turbine and the compressor. The combustor is fluidically connected to the compressor to receive a first portion of the compressed air as combustor primary inlet air and also includes a toroidal recirculation zone configured to receive and combust fuel in a rich combustion zone, an ignitor positioned to ignite an air/fuel mixture in the rich combustion zone, a rapid quench zone downstream of the toroidal recirculation zone, a lean combustion zone downstream of the rapid quench zone, and a cooling air flow path configured to direct a second portion of the compressed air around an outer combustor liner to cool the combustor liner and to provide a source of quench air, inner combustor liner cooling air, fuel injector air, and combustor secondary inlet air. The rapid quench zone is configured to receive and quench with quench air combustion products from the rich combustion zone. The lean combustion zone is configured to complete combustion of the fuel and to generate hot combustor exhaust gas. The turbine is fluidically connected to the compressor to receive the hot combustor exhaust gas. The shaft is configured to transmit rotational energy from the turbine to the compressor to power the compressor, and pump fuel from a fuel source to the combustor through a fuel duct in the shaft. The shaft connects the turbine to the compressor through an annulus formed by the combustor surrounding the shaft and also includes a shaft cooling air pump configured to further compress the second portion of the compressed air before the second portion of the compressed air enters the combustor as fuel injector air and combustor secondary inlet air.

Another aspect of the invention is directed to a combustor for a gas turbine engine that includes a combustor liner that defines a perimeter of the combustor, wherein the combustor liner includes an inner combustor liner that defines an inner perimeter of the combustor that is exposed to combustion and an outer combustor liner that defines an outer perimeter of the combustor that is exposed to cooling air. The combustor is positioned fluidically and physically downstream of a compressor and is fluidically connected to the compressor to receive a first portion of compressed air as combustor primary inlet air and also includes a toroidal recirculation zone configured to receive and combust fuel in a rich combustion zone, an ignitor positioned to ignite an air/fuel mixture in the rich combustion zone, a rapid quench zone downstream of the toroidal recirculation zone, wherein the rapid quench zone is configured to receive and quench with quench air combustion products from the rich combustion zone, and a lean combustion zone downstream of the rapid quench zone, wherein the lean combustion zone is configured to complete combustion of the fuel and to generate hot combustor exhaust gas. The outer combustor liner further defines a cooling air flow path configured to direct a second portion of the compressed air around the outer combustor liner to cool the combustor liner and to provide a source of quench air, inner combustor liner cooling air, fuel injector air, and combustor secondary inlet air.

### BRIEF DESCRIPTION OF THE DRAWINGS

Fig. 1 is a cross section of an exemplary engine of the present disclosure.
Fig. 2A is a cross section of another exemplary engine of the present disclosure.
Fig. 2B is a cross section of yet another exemplary engine of the present disclosure.
Fig. 3A is a schematic view of the hollow cooled 1^{st} stage turbine vane cross section.
Fig. 3B is a schematic view of the hollow cooled 1^{st} stage turbine vanes.
Fig. 4 is a schematic view of a fuel-cooled aft bearing.
Fig. 5A is a schematic showing the arrangement of ID and OD quench tubes to create bulk swirl in the quench and lean zones of the combustor.
Fig. 5B is a downstream view (i.e., looking aft to front) of the arrangement of ID and OB quench tubes showing quench air flows exiting the ID and OD quench tubes.
Fig. 5C is an upstream view (i.e., looking front to aft) of the arrangement of ID and OD quench tubes.
Fig. 6A is an alternate view of Fig. 2A showing the location and orientation of pre-diffuser deswirl channels and vanes, turbine wheel cooling air deswirl channels and vanes, and combustor inlet deswirl vanes.
Fig. 6B is another view of the shaft cooling air pump of Fig. 6A depicting air and fuel flow.
Fig. 6C is a flow chart showing the progression of rotating and static portions of the engine.
Fig. 7A is one example of a shaft cooling air pump of this disclosure.
Fig. 7B is another example of a shaft cooling air pump of this disclosure.
Fig. 7C is another view of the shaft cooling air pump of Fig. 6B.
Fig. 7D is another view of the shaft cooling air pump of Fig. 6B in which the pump threads are shrouded.
Fig. 7E is a third example of a shaft cooling air pump of this disclosure, including a turbine wheel with vanes to pump inner diameter combustor air.
Fig. 7F is a fourth example of a shaft cooling air pump of this disclosure, including a turbine wheel with helix scroll to pump inner diameter combustor air.
Fig. 8A is a schematic view a shaft fuel injection system.
Fig. 8B is a schematic view a shaft fuel injection system with multiple fuel orifices.
Fig. 8C is a more detailed schematic of the shaft fuel injection system.
Fig. 8D is perspective view of the shaft fuel injection system.
Fig. 9A is a schematic view a primary fuel flow (directed to combustor liner wall opposite fuel injector) and secondary fuel flow (directed to combustor liner wall adjacent to fuel injector).
Fig. 9B is an overhead view of the fuel injection system of Fig. 8A.
Fig. 9C is a schematic of one alternate configuration for the primary fuel flow of Fig. 8A.
Fig. 9D is an overhead view of the fuel injection system of Fig. 9C.
Fig. 9E is a schematic of another alternate configuration for the primary fuel flow of Fig. 8A.
Fig. 9F is an overhead view of the fuel injection system of Fig. 9E.
Fig. 10 is a schematic view of the combustor on an additive manufacturing build plate.

### DETAILED DESCRIPTION

Small gas turbine engines are useful for a number of applications for which small size, high altitude relight capability, improved operability and lean blow out characteristics, and good operational life are desirable. In addition, it is often desirable that significant portions of such gas turbine engines can be made using additive manufacturing processes. Some previous small gas turbine engine designs were challenged by combustor designs that resulted in limited height recirculation zones, leading to limitations in altitude relight capabilities; reverse flow designs that resulted in hot exhaust combustor exhaust gases being cooled by combustor inlet air, thereby decreasing the energy available to recover in the turbine; fuel injection systems that rely on a pump and manifold for effective fuel distribution, resulting in a combustor package that was larger than desired; and ignitor positioning that resulted in a combustor that was undesirably long. The gas turbine engine, and particularly the combustor for the gas turbine engine, that is the subject of this disclosure includes features that address each of the shortcomings of previous small gas turbine engine designs.

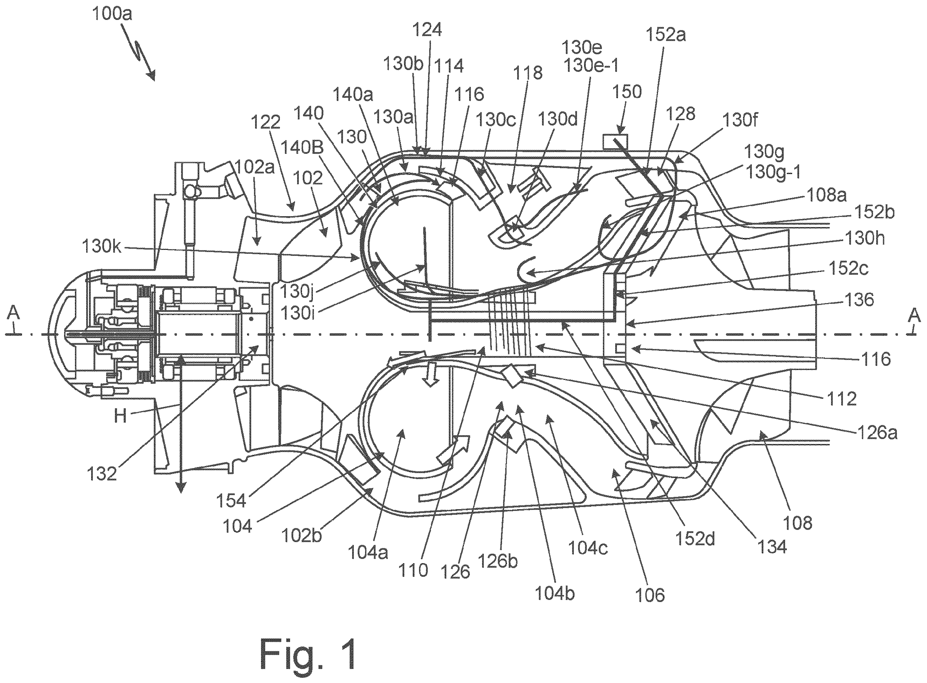

Referring to Fig. 1, a gas turbine engine **100a** of this disclosure includes a compressor **102** configured to receive inlet air at compressor inlet **102a** and to generate compressed air **130** at an exit **102b** of the compressor **102.** A combustor **104** is fluidically connected to the compressor **102** to receive a first portion of the compressed air **130** as combustor primary inlet air **130a.** The combustor **104** is positioned downstream of the compressor **102** both fluidically (i.e., compressed air flows from the compressor **102** to the combustor **104**) and spatially (i.e., the combustor **104** is positioned physically downstream of the compressor **102** along an axis of rotation **A**)**.** A turbine **108** is fluidically connected to the combustor **104** to receive hot combustor exhaust gas **106** from the combustor **104.** The turbine **108** is positioned downstream of the combustor **104** both fluidically (i.e., hot combustor exhaust gas flows from the combustor **104** to the turbine **108**) and spatially (i.e., the turbine **108** is positioned physically downstream of the combustor **104** along the axis of rotation **A**)**.** Positioning the turbine **108** downstream of the combustor **104** separates the hot combustor exhaust gas **106** from compressed air **130** exiting the compressor **102,** avoiding unwanted heat exchange between the hot combustor exhaust gas **106** and compressed air **130** that can occur in some prior designs. A shaft **110** mechanically connects the turbine **108** to the compressor **102** and transmits rotational energy from the turbine **108** to the compressor **102** to drive the compressor **102.** Shaft **110** is supported by front bearing **132** and aft bearing **136,** which surrounds the shaft immediately upstream of the turbine **108,** and support the shaft **110** when it rotates in operation. As discussed in more detail below, the shaft **110** is further configured to pump fuel from a fuel source **150** and to direct the fuel to the combustor **104** through a fuel duct **152a-e** in the shaft **110** and to further pressurize a portion of the compressor air through a shaft cooling air pump **112** before the second portion of the compressed air enters the combustor **104** as quench air **130d, 130h,** fuel injector air **130i, 130j,** and combustor secondary inlet air **130k.**

While Fig. 1 depicts the compressor **102** as a centrifugal compressor and turbine **108** as a centrifugal turbine, a person of ordinary skill will recognize that an axial compressor and/or an axial turbine could be useful for certain applications. In the example of Fig. 1, the centrifugal compressor **102** and centrifugal turbine **108** were selected to provide the desired packaging (e.g., compact size, etc.) for the gas turbine engine **100a.**

Fig. 1 further shows that the combustor **104** includes a rich combustion zone **104a** configured as a toroidal recirculation zone to combust fuel with an air/fuel ratio less than 1; a rapid quench zone **104b** fluidically downstream of the rich combustion zone **104a** that is configured to receive and quench with quench air **130d, 130h** combustion products (i.e., unburned fuel, carbon monoxide (CO) and other combustion product) from the rich combustion zone **104a;** and a lean combustion zone **104c** downstream of the rapid quench zone **104b.** The lean combustion zone **104c** is configured as a bulk swirl zone to complete combustion of the fuel with an air/fuel ratio greater than 1 and to generate hot combustor exhaust gases **106** that are directed to the turbine **108.**

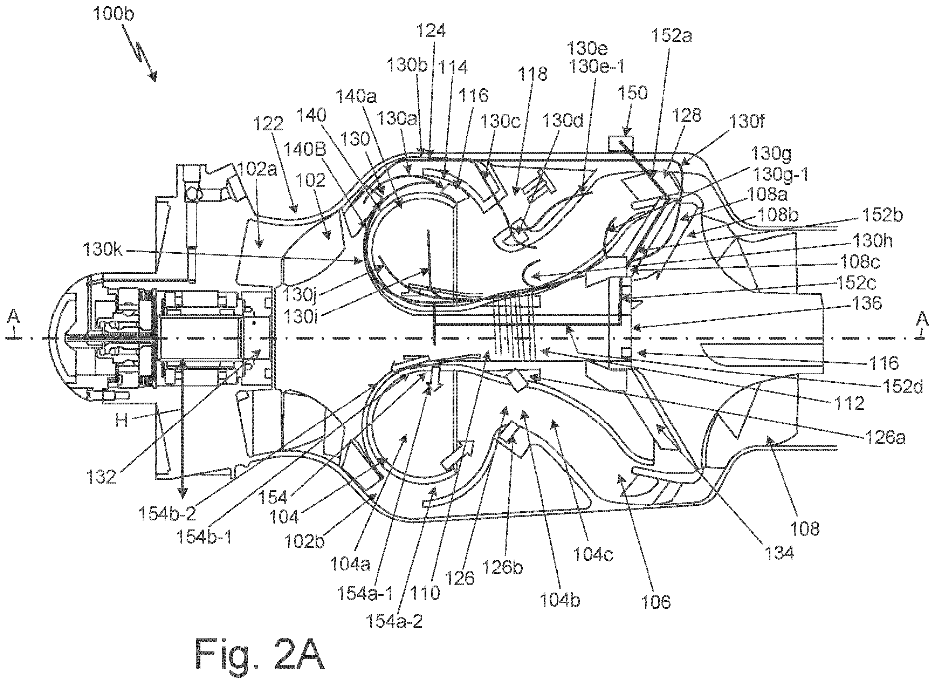

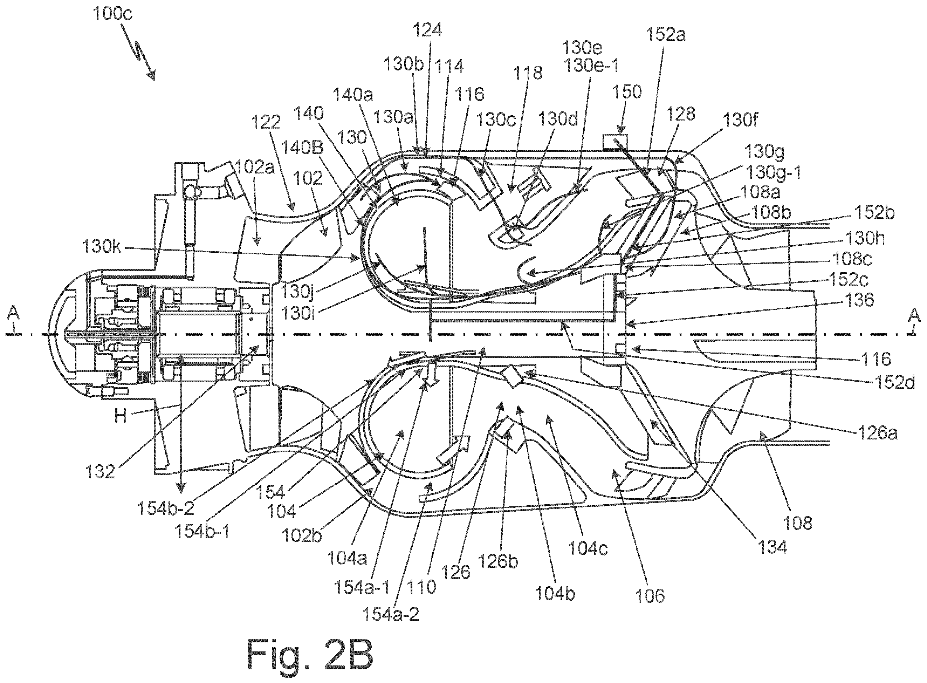

As mentioned above, the rich combustion zone **104a** is configured as a toroidal recirculation zone with circulation provided air entering the combustor inlet **114** as combustor primary inlet air **130a** and combustor secondary inlet air **130k** and air entering the fuel injector **154** (as described in more detail below) as primary fuel injector air **130i** and secondary fuel injector air **130j.** The flow of combustor primary inlet air **130a,** combustor secondary inlet air **130k,** primary fuel injector air **130i,** and secondary fuel injector air **130j** into the rich combustion zone **104a** creates a bulk swirl in an axial plane that can manifest itself as a counterclockwise rotation. Combustor primary inlet air **130a** and combustor secondary inlet air **130k** mix and are directed across combustor inlet deswirl vanes **116** that are configured to straighten airflow into the combustor and secondarily to provide structural support for the combustor liner **140** in the rich combustion zone **104a.** The combustor inlet deswirl vanes **116** can further be configured as bluff bodies to create a quiescent flow zone downstream of the combustor inlet deswirl vanes **116** to support flame stability and desirable altitude relight and lean blow out characteristics as the air/fuel mixture in the rich combustion zone **104a** flows toward ignitor **118.** As shown in Fig. 1, the combustor inlet deswirl vanes **116** are positioned immediately upstream of ignitor **118** and provide a good environment for fuel ignition and sustained combustion. The ignitor **118** can be a spark ignitor or any other type of gas turbine engine ignitor that is deemed appropriate for the application. The ignitor **118** should be designed to provide ignition of a rich air/fuel mixture in the rich combustion zone **104a** at all design conditions, including ground level and altitude conditions. As shown in Figs. 1 and 2, positioning the ignitor **118** is immediately downstream of the combustor inlet deswirl vanes **116** and above the quench zone inlet **126** permits the ignitor **118** to be packaged tightly within the combustor envelope to provide a combustor **104** much shorter than is typically the case with older designs that have an ignitor that extends lengthwise from the combustor.

To support flame stability and desired altitude relight and lean blow out characteristics, the rich combustion zone **104a** is configured with a relatively large toroidal recirculation zone height **H** (i.e., the distance between the combustor inlet **114** and the fuel injector **154** to provide a desired (e.g., maximized or other appropriate) flow residence time in the rich combustion zone **104a.** For example, the toroidal recirculation zone height **H** can be roughly the height of the compressor inlet **102a.** Further the relatively large toroidal recirculation zone height **H** combined with airflow **130a, 130i, 130j, 130k** into the rich combustion zone **104a** creates a bulk swirl in an axial plane of the rich combustion zone **104a.**

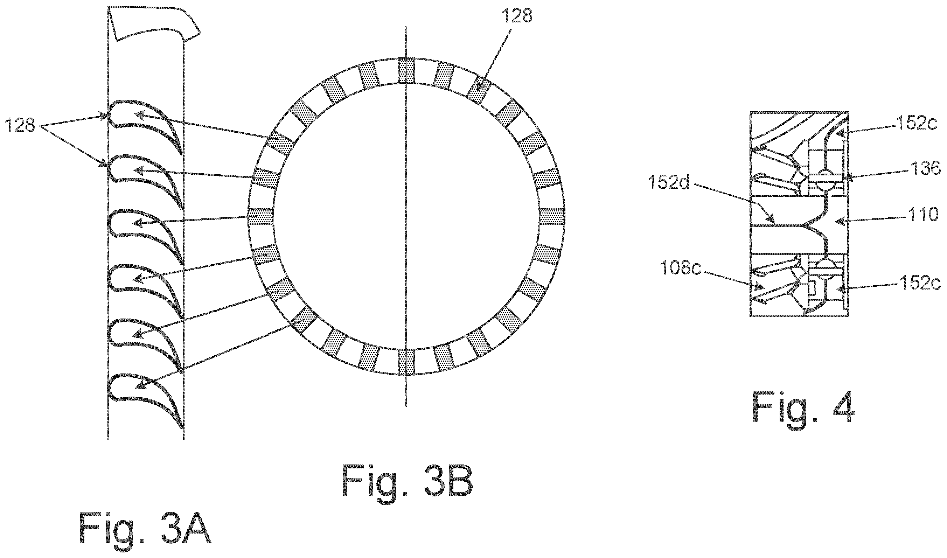

Combustion products exit the rich combustion zone **104a** through quench zone inlet **126** where they mix rapidly with outer diameter (OD) quench air **130d** and inner diameter (ID) quench air **130h** that enter the quench zone **104b** through ID quench tubes **126a** and OD quench tubes **126b.** Quench zone inlet **126** is configured as a converging nozzle to accelerate unburned fuel and rich combustion zone **104a** products into the quench zone to promote mixing with the quench air **130d, 130h.** The orientation of the quench tubes, which can be 45°, create a bulk swirl in a circumferential plane that also promotes rapid mixing of rich combustion zone **104a** products with the quench air **130d, 130h.** The mixture of unburned fuel, rich combustion zone **104a** products, and quench air **130d, 130h** exits the quench zone **104b** and enters the lean combustion zone **104c** where OD combustor liner cooling air **130e** and ID combustor liner cooling air **130g** is added through a plurality of OD aft combustor liner cooling air trim holes **130e-1** and a plurality of ID aft combustor liner cooling air trim holes **130g-1** to create lean combustion conditions (i.e., air/fuel ratio greater then 1) to complete combustion. The bulk circumferential swirl generated in the quench zone **104b** continues through the lean combustion zone **104c** to provide thorough mixing of unburned fuel, rich combustion zone **104a** products, and air streams **130d, 130e, 130g,** and **130h.** Combustor exhaust gas **106** exits the combustor **104** by flowing across a plurality of hollow 1^{st} stage turbine vanes **128** positioned between the combustor **104** and the turbine **108** to remove the bulk circumferential swirl created in the lean combustion zone **104c** before the combustor exhaust gas **106** enters the turbine **108.** The plurality of hollow 1^{st} stage turbine vanes **128** are further configured to provide structural support for the combustor liner **140** in the lean combustion zone **104c.** Figs. 3A and 3B show more detailed views of the hollow 1^{st} stage turbine vanes **128.**

Figs. 2A and 2B, which will be described with Fig. 1, shows airflow through gas turbine engine **100b.** Gas turbine engine **100b** is very similar to gas turbine engine **100a** shown in Fig. 1 with the addition of a turbine wheel compression stage **108b** and turbine wheel deswirl vanes **108c,** both of which are discussed later in this disclosure. As discussed above, compressed air **130** exits the compressor **102** at the compressor exit **102b** is divided into a combustor primary air stream **130a,** which enters the combustor **104** at the combustor inlet **114,** and a second portion **130b** of compressed air, which enters cooling air flow path **124** becomes the source of all of the further airflows described below. Cooling air flow path **124** follows the exterior **140b** of the combustor liner **140** (i.e., the outer combustor liner wall **140b**) to cool the combustor liner **140,** which defines the perimeter of the combustor **104,** and supply the airflows described below, essentially creating a 360° cooling loop surround the combustor liner **140.** The inner combustor liner wall **140a** defines the inner perimeter of the combustor 104 that is exposed to combustion. The outer combustor liner wall **140b** defines the outer perimeter of the combustor **104** that is exposed to cooling air.

A portion of the second portion **130b** of compressed air becomes OD air **130c,** which splits into the OD quench air **130d** and OD combustor liner cooling air **130e.** The OD quench air **130d** enters the quench zone **104b** through OD quench tubes **126b,** which are described in more detail below. The OD combustor liner cooling air **130e** enters the lean combustion zone **104c** downstream of the OD quench tubes **126b** to provide cooling and supplemental combustion air in the lean combustion zone **104c.** The OD combustor liner cooling air **130e** can be configured to enter the lean combustion zone **104c** through film cooling holes (not shown) or any other feature that can create a layer of air attached to the inner combustor liner wall **140a** of the lean combustion zone **104c** to provide effective cooling and/or larger sized film cooling holes to tailor a radial temperature profile going in the hollow 1^{st} stage turbine vanes **128.** The remaining amount of the second portion **130b** of compressed air flows around the combustor **104** as ID air **130f** to provide cooling and combustion air to other portions of the combustor **104.**

ID air **130f** first flows through the hollow 1^{st} stage turbine vanes **128** to provide cooling and then into a turbine air plenum **108a** positioned between the turbine **108** and the combustor **104.** In the example of gas turbine engine **100a** (Fig. 1), the ID air **130f** then splits into ID combustor liner cooling air **130g** and ID quench air **130h** with the remaining ID air **130f** continuing through shaft cooling air pump **112.** In the example of gas turbine engine **100b** (Fig. 2A), the ID air **130f** is further compressed by turbine wheel compression stage **108b** after which it flows through turbine wheel deswirl vanes **108c** before splitting into ID combustor liner cooling air **130g** and ID quench air **130h.** As with gas turbine engine **100a,** the remaining ID air **130f** continues through shaft cooling air pump **112.** In both examples, ID combustor liner cooling air **130g** enters the lean combustion zone **104c** downstream of the ID quench tubes **126b** to provide cooling and supplemental combustion air in the lean combustion zone **104c.** As with the OD combustor liner cooling air **130e,** ID combustor liner cooling air **130g** can be configured to enter the lean combustion zone **104c** through film cooling holes (not shown) or any other feature that can create a layer of air attached to the inner combustor liner wall **140a** of the lean combustion zone **104c** to provide effective cooling and/or larger sized film cooling holes to tailor a radial temperature profile going in the hollow 1^{st} stage turbine vanes **128.** ID quench air **130h** enters the quench zone **104b** through ID quench tubes **126a,** which are described in more detail below. Shaft cooling air pump **112,** turbine wheel compression stage **108b,** and turbine wheel deswirl vanes **108c** are also described in more detail below.

Cooling air exiting the shaft cooling air pump **112** ultimately splits into three streams: primary fuel injector air **130i,** secondary fuel injector air **130j,** and combustor secondary inlet air **130k.** As described further below, both primary fuel injector air **130i** and secondary fuel injector air **130k** mix with fuel in fuel injector **154** and enter rich combustion zone **104a.** The combustor secondary inlet air **130j** flows around the outside of rich combustion zone **104a** liner to provide cooling before mixing with combustor primary inlet air **130a** across the combustor inlet deswirl vanes 116 at the combustor inlet **114.** The distribution of compressed air **130** across each of the stream described here depend on the requirements of each specific application. In one example, the distribution of compressed air **130** can be as shown in the following table. A person of ordinary skill will recognize that many other distributions of compressed air **130** are possible.

**Table of Air Streams**

| Air Stream | Percentage of Total Compressed Air **130** |
|---|---|
| Combustor primary air **130a** | 10 |
| Second portion **130b** of compressed air | 90 |
| OD air **130c** | 25 |
| OD quench air **130d** | 20 |
| OD combustor liner cooling air **130e** | 5 |
| ID air **130f** | 65 |
| ID combustor liner cooling air **130g** | 5 |
| ID quench air **130h** | 20 |
| Primary fuel injector air **130i** + Secondary fuel injector air **130j** | 15 |
| Combustor secondary inlet air **130k** | 5 |
| Compressed air **130** | 100 |

Circulating cooling air about the combustor **104** as described above and facilitated by the shaft cooling air pump **112** provides cooling to all relevant portions of the combustor **104,** permitting the combustor **104** to operate at desired temperatures while maintaining a desired operational life. Moreover, using cooling air to cool the hollow 1^{st} stage turbine vanes **128,** permits the combustor **104** to operate with a higher exhaust temperature than would be the case without cooling the 1^{st} stage turbine vanes. The higher combustor exhaust gas **106** temperature enhances energy available for recovery in the turbine **108** and for use as propulsion.

Fig. 2A also shows fuel flow through gas turbine engine **100b** (which applies equally to gas turbine engine **100a** in Fig. 1) Fuel flows from fuel source **150** through a series of fuel ducts **152a-e** toward a plurality of fuel injectors **154,** providing cooling along the way. First, fuel flow through fuel duct **152a** to hollow strut **134,** which provide structural support for the shaft **110** and aft bearing **136** on top of hollow 1^{st} stage turbine vanes **128.** Being positioned in a hot portion of gas turbine engine **100b** (or **100a**) downstream of the combustor **104,** both the hollow strut **134** and aft bearing **136** require cooling to retain structural integrity and to function as desired. A person of ordinary skill will recognize that the hollow strut **134** and aft bearing **136** can be of any design that will allow them to support shaft **110** as it rotates in operation. Fuel can be supplied to the shaft **110** through one or more of the hollow struts **134** in fuel channel **152b,** which can be part of the structure of hollow strut **134** and can be insulated to prevent coking within the hollow 1^{st} stage turbine vanes **128.** Inner diameter air **130f** also provides cooling to the hollow struts **134.** As shown in more detail in Fig. 4, fuel exiting the hollow strut **134** flows through fuel channel **152c** to and through aft bearing **136** to provide the required cooling. Fuel exiting aft bearing **136** enters fuel channel **152d,** which runs through shaft **110.** As described further below, rotation of shaft **110** provides pumping action to pull fuel from fuel source **150,** through fuel ducts **152a-d** and into fuel duct **152e.** Fuel from fuel duct **152e** flows into fuel injector **154** where it then enters rich combustion zone **104a** as described further below.

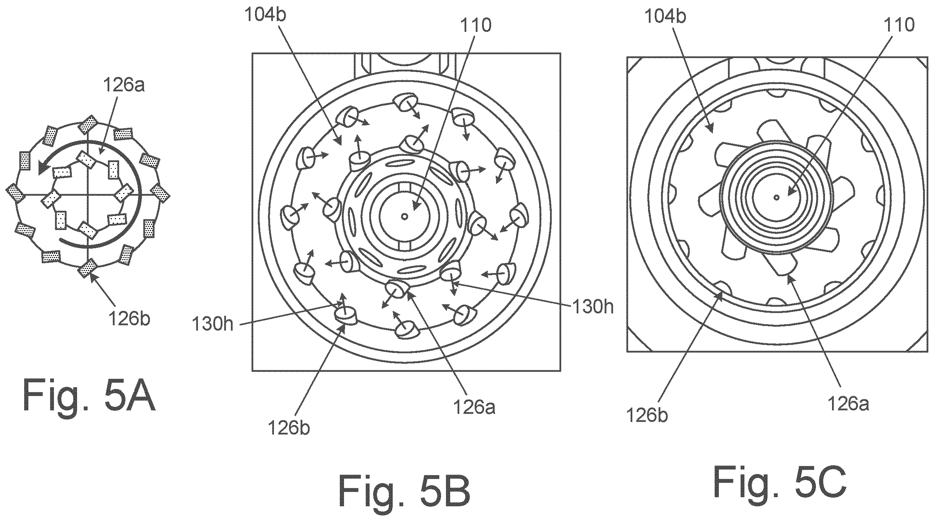

Figs. 5A-C, which will be discussed together, further illustrate the arrangement of the ID quench tubes **126a** and the OD quench tubes **126b.** As discussed above, the quench zone **104b** of the combustor **104** is positioned downstream of the rich combustion zone **104a.** The quench zone **104b** is configured as an annulus having a cross-section smaller than the height of the rich combustion zone **104a,** forming a converging annulus that can accelerate combustion products from the rich combustion zone 104a as they flow into the quench zone **104b** and mix with OD quench air **130d** from OD quench tubes **126b** and ID quench air **130h** from ID quench tubes **126a.** Fig. 5A is a schematic showing the arrangement of ID and OD quench tubes **126a, 126b** to create bulk swirl in the quench **104b** and lean **104c** zones of the combustor **104.** As shown in Fig. 5A, the ID and OD quench tubes **126a, 126b** are angled in the same direction around the quench zone **104b** to create the desired bulk swirl. While the ID and OD quench tubes **126a, 126b** can have any angle, it might be desirable for each of the ID and OD quench tubes **126a, 126b** to have the same angle. The angle for the ID and OD quench tubes **126a, 126b** can be selected to provide the desired bulk swirl and can also be selected to facilitate manufacturability. For example, if the ID and OD quench tubes **126a, 126b** will be formed using additive manufacturing techniques, it might be desirable to orient the ID and OD quench tubes **126a, 126b** at 45°, which is an angle that is convenient to make using additive manufacturing techniques.

Fig. 5B is a downstream view (i.e., looking aft to front along axis A of Figs. 1 and 2) of the arrangement of ID and OB quench tubes **126a, 126b** showing quench air flows **130c, 130h** as they are received and directed by the ID and OD quench tubes **126a, 126b.** Shaft 110 is shown as it passes through the combustor **104.** Fig. 5C is an upstream view (i.e., looking front to aft along axis A of Figs. 1 and 2) of the arrangement of ID and OD quench tubes **126a, 126b.** While figs. 5A-5C show 8 ID quench nozzles **126a** and 12 OD quench tubes **126b,** it should be understood that any number of ID quench tubes **126a** and OD quench tubes **126b** appropriate to create the desired bulk swirl through the quench zone **104b** and lean combustion zone **104c** can be used. Further, the positioning of the ID quench tubes **126a** and OD quench tubes **126b** can be selected to fluidically isolate the rich combustion zone **104a** from the rapid quench zone 104b. Additionally, it should be understood that the diameter, geometry, and other mechanical dimensions of the ID quench tubes **126a** and OD quench tubes **126b** should be selected to provide the desired bulk swirl through the quench zone **104b** and lean combustion zone **104c.** As can be seen in Fig. 5B and 5C, it may be desirable to angle the ID quench tubes **126a** and OD quench tubes **126b** downstream to entrain the unburned fuel and rich combustion zone **104a** products as they flow through the quench zone **104b** into the lean combustion zone **104c.** Further, the geometry of the ID quench tubes **126a** and OD quench tubes **126b** can be selected to have a constant circular cross section, a decreasing cross section (i.e., a convergent nozzle), an increasing cross section (i.e., a divergent nozzle) for a single tube, all of the tubes, or any combination of the tubes depending on the requirements of a particular application. Appropriate selection of the number, spacing, angling, geometry, and mechanical dimensions of the ID quench tubes **126a** and OD quench tubes **126b** can be used to tailor the combustor **104** exit temperature and pattern factor (PF), which is defined as PF = (T4ₚₑₐₖ - T4_{avg})/T4_{avg} where T4 is the combustor **104** exit temperature. Typically, a lower pattern factor (i.e., even temperature distribution) is a desirable design criterion.

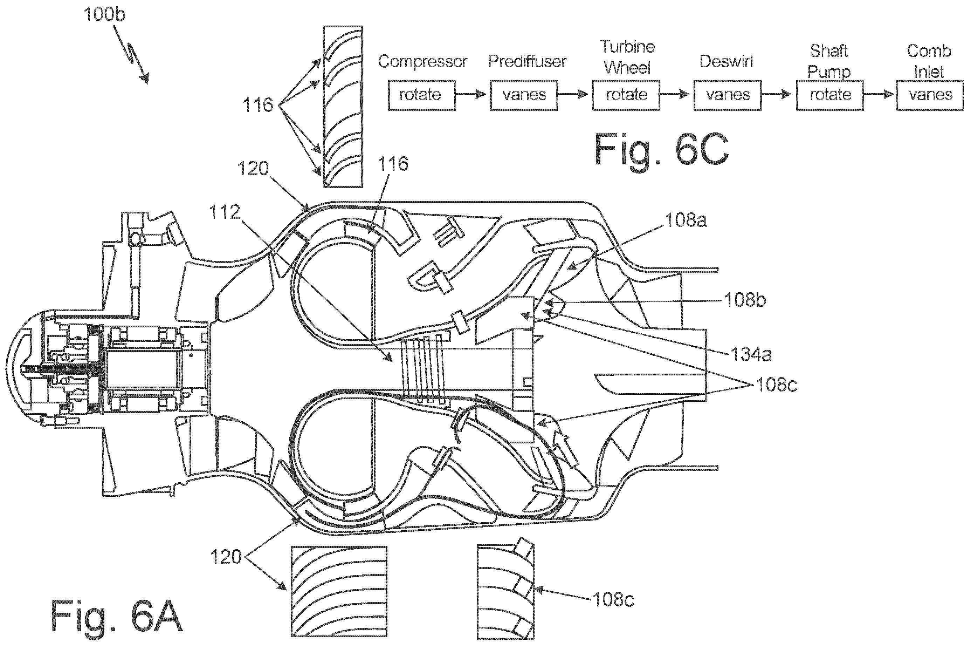

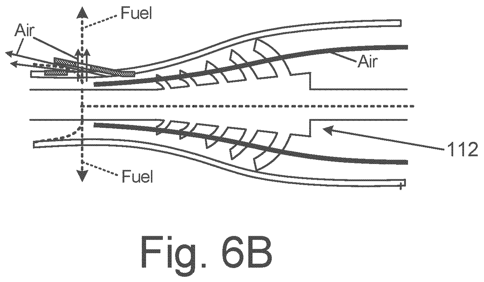

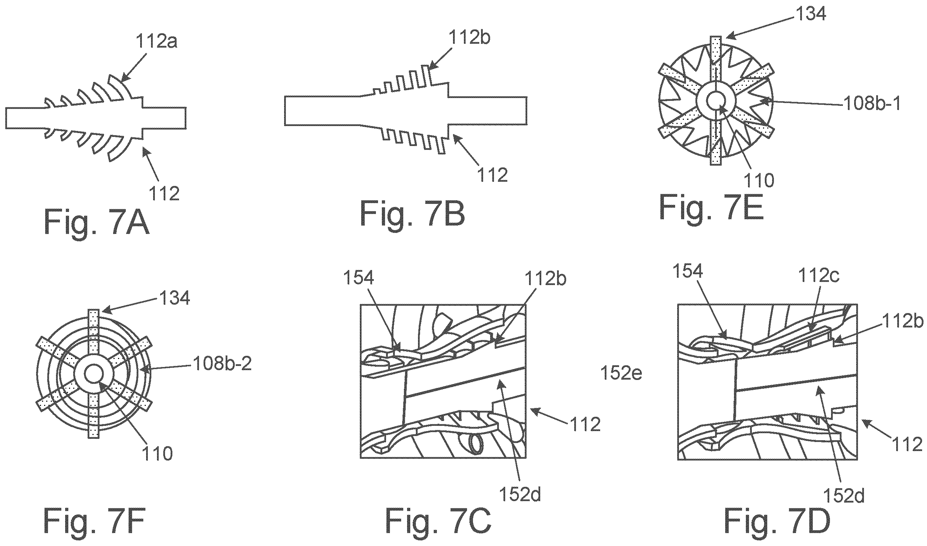

Fig. 6A is an alternate view of Fig. 2 showing additional features related to the supercharging (i.e., supplemental compression) of ID cooling air **130f.** As discussed above, after providing cooling to the hollow cooled 1^{st} stage turbine vanes **128,** ID cooling air **130f** flows into turbine air plenum **108a.** In the example of Fig. 1, ID cooling air **130f** provides ID combustor liner cooling air **130g** and ID quench air **130h** before entering shaft cooling air pump **112.** Shaft cooling air pump **112** can be any mechanical pump, such as the screw pump depicted in Figs. 1, 2, and 6A, that can further compress (i.e., further pressurize) cooling air to provide sufficient energy for the primary fuel injector air **130i,** secondary fuel injector air **130j,** and combustor secondary inlet air **130k** to flow to their respective destinations as described above. In so doing, shaft cooling air pump **112** also provides suction to transport ID cooling air **130f** to flow along the combustor **104** liner, hollow cooled 1^{st} stage turbine vanes **128,** and turbine air plenum **108a** as described above. Figs. 7A and 7B show two possible configurations for shaft cooling air pump **112** shaft cooling air pump **112** are possible as well. Fig. 7A shows shaft cooling air pump **112** with arched vanes **112a.** Fig. 7B shows shaft cooling air pump **112** with straight screw threads **112b.** Fig. 7C shows a perspective view of the shaft cooling air pump **112** of Fig. 7B. Fig. 7D is similar to Fig. 7C and shows the shaft cooling air pump **112** straight screw threads **112b** with shrouds **112c,** which are positioned on radially outboard tip of the straight screw threads **112b.** The shrouds **112c** are configured to maintain a desired velocity for the compressed air flowing through the cooling air flow path **124.** Arched screw threads **112a,** unshrouded or shrouded, or straight screw threads **112b,** shrouded or unshrouded, or any other configuration can be selected to provide the desired additional compression for the cooling air. Also, the screw threads **112a, 112b** can be configured to engage with the outer combustor liner wall **140b** to cause the outer combustor liner wall **140b** to function as an outer shroud for the screw threads **112a, 112b.** The pitch of the screw threads **112a, 112b** and rotational speed of the shaft **110** determine the flow rate of compressed air exiting the shaft cooling air pump **112.** Further the configuration of the plurality of shaft cooling air pump **112** screw threads **112a, 112b** can be selected to facilitate construction using additive manufacturing techniques. For example, arched screw threads **112a** may be more amendable to construction using additive manufacturing techniques then straight threads **112b.**

Returning to Fig. 6A, turbine wheel compression stage **108b** can provide further supercharging (i.e., supplemental compression) of ID cooling air **130f** in addition to that provided by shaft cooling air pump **112** or instead of that provided by shaft cooling air pump **112.** Turbine wheel compression stage **108b** can of any design that can provide supplemental compression of ID cooling air **130f** flowing through turbine air plenum **108a.** As shown in Fig. 6A and 7E, the turbine wheel compression stage **108b** can include a plurality of compression blades **108b-1** that are configured to rotate with the turbine **108** and compress ID cooling air **130f** flowing through turbine air plenum **108a.** The plurality of compression blades **108b-1** can be further configured to engage with a plurality of strut shrouds **134a** positioned on the struts **134** to provide additional compression for ID cooling air **130f** flowing through the turbine air plenum **108a.** Alternately, as shown in Fig. 7F the turbine wheel compression stage **108b** can be a scroll compressor **108b-2** that is configured to rotate with the turbine **108** and compress ID cooling air **130f** flowing through turbine air plenum **108a.** A person of ordinary skill will recognize that other options are available for turbine wheel compression stage **108b.**

Fig. 6C is a flow chart showing the progression of rotating and static portions of the gas turbine engine **100a, 100b** as a companion to Fig. 6A, which shows the location and orientation of pre-diffuser deswirl channels and vanes **120,** turbine wheel cooling air deswirl channels and vanes **108c,** and combustor inlet deswirl vanes **116.** As known in the art, rotating stages in gas turbine engines, such as engines **100a, 100b,** are typically followed by stationary vane stages to remove swirl imparted by the rotating stages. That is the function that the pre-diffuser deswirl channels and vanes **120,** turbine wheel cooling air deswirl channels and vanes **108c,** and combustor inlet deswirl vanes **116** that are depicted in Fig. 6A perform. As a secondary function, the pre-diffuser deswirl vanes **120** can be configured to provide further structural support for the combustor liner **140** in the rich combustion zone **104a.**

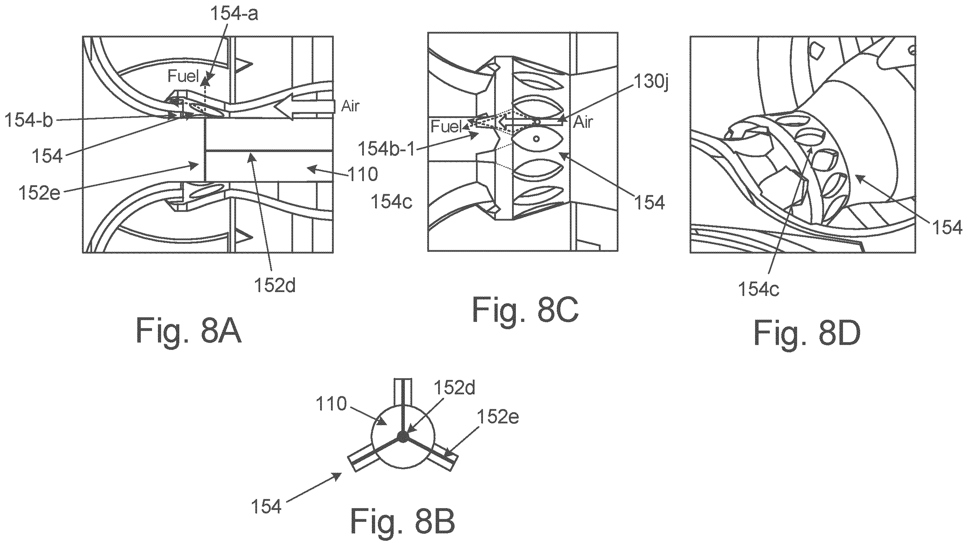

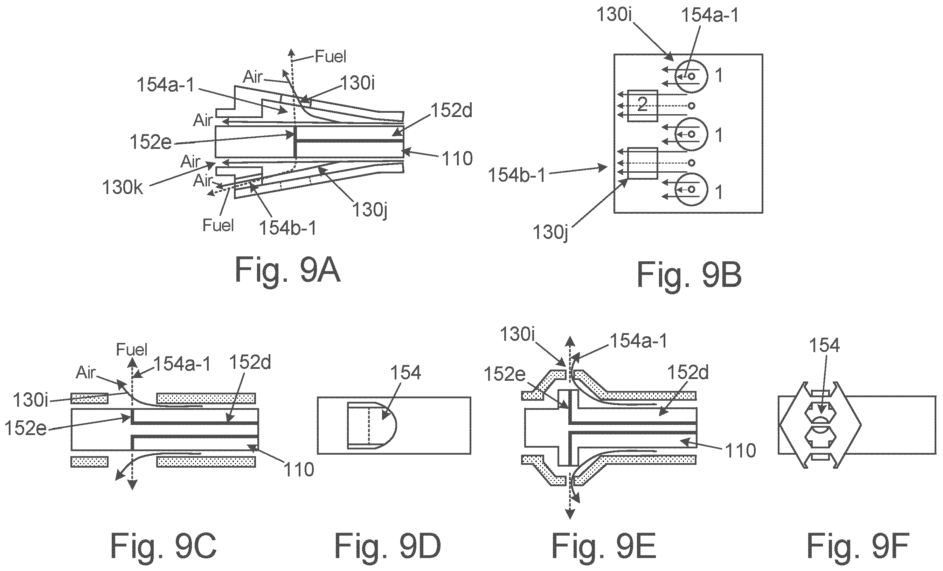

Figs. 8A-D and 9A-F, which will be discussed together with Fig. 2, further illustrate the fuel injector **154** and fuel and air flow through the fuel injector **154.** As shown in Fig. 2, fuel enters the toroidal recirculation zone of the rich combustion zone **104a** through the fuel injector **154** in two steams, a primary fuel flow **154a-1** which flows radially across the rich combustion zone **104a** where it impinges on a "splash plate" portion of the combustor liner wall **154a-2** (i.e., part of the inner combustor liner wall **140a**) and a secondary fuel flow **154b-1** which flows circumferentially along the combustor liner wall **154b-2** adjacent to and immediately downstream of the fuel injector **154.** The fuel streams mix with the air and the remaining liquid fuel films and vaporize as they impinge on their respective portions of the combustor liner wall **154a-2, 154b-2** to form a combustible mixture with air in the rich combustion zone **104a.** The flow of fuel and air in the toroidal recirculation zone, include primary fuel injector air **130i** that enters with the primary fuel flow **154a-1** and secondary fuel injector air **130j** that enters with the secondary fuel flow **154b-1,** carriers fuel that films and vaporizes at the "splash plate" portion of the combustor liner wall **154a-2** toward the ignitor **118** where it ignites to support combustion in the rich combustion zone **104a.** Figs. 8A and 8B show more detailed schematics of the primary fuel flow **154a-1** and secondary fuel flow **154b-1** entering the rich combustion zone **104a.** Figs. 8C and 8D show an example of fuel injectors **154** having a lozenge-shaped opening, though opening of any other shape-particularly shapes suitable for construction using additive manufacturing techniques can be used. The fuel injected from the rotating shaft **152** enters the inner combustor liner wall **140a** through apertures **154** in the inner combustor liner wall **140a** and becomes primary fuel flow **154a-1** or hits the inner combustor liner wall **140a** and is mixed with air through adjacent lozenge-shaped openings 154c that function as converging/diverging nozzles that accelerate secondary fuel injection air **130j** as it mixes with the secondary fuel flow **154b-1.**

Figs. 9A-F show other illustrations of the fuel injector **154** and fuel and air flow and mixing through the fuel injector **154.** Fig. 9A is an exemplary configuration that shows primary fuel flow **154a-1,** primary fuel injector air **130i,** secondary fuel flow **154b-1,** and secondary fuel injector air **130j.** Fig. 9B is another view of the fuel injector 154 of Fig. 9A "unwrapped" to show the plurality of primary fuel flows **154a-1,** primary fuel injector air **130i** flows, secondary fuel flows **154b-1,** and secondary fuel injector air **130j** flows. Fig. 9D shows an another exemplary configuration for the fuel injector **154,** which can be described as an arch that forms a self-supporting wall that limits the amount of abutment material to prevent fuel blockage. Figs. 9E-F show yet another exemplary configuration for the fuel injector **154,** which can be described as an "stub" or "bump-out" to distribute the primary fuel flow **154a-1** closer to the "splash plate" portion of the combustor liner wall **154a-2.**

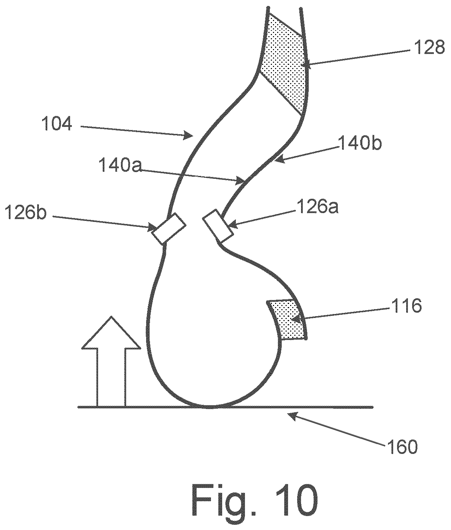

As discussed throughout this disclosure, various elements of the gas turbine engines **100a, 100b** can be constructed with additive manufacturing techniques, including but not limited to Powder Bed Fusion-Laser/Electron Beam, Directed Energy Deposition, and other additive manufacturing techniques. As shown in Fig. 10, the combustor **104** described in this disclosure can be built "vertically" on an additive manufacturing build plate **160.** Depending on the combustor **104** design and additive manufacturing technique selected, other features such as the combustor inlet deswirl vanes **116**, ID and OD quench tubes **126a, 126b** and hollow cooled 1^{st} stage turbine vanes **128** can be made as part of the same build campaign as the combustor **104.** The gas turbine engines **100a, 100b** of this disclosure can be made from any materials appropriate for the desired application and selected manufacturing techniques, including additive manufacturing techniques.

The gas turbine engines described in this disclosure can be characterized as being useful for applications for which small size, high altitude relight capability, improved operability and lean blow out characteristics, and good operational life are desirable. In particular, the gas turbine engines of this disclosure have larger height recirculation zones to support altitude relight capabilities and flame stability. The arrangement of the combustor and integration of the ignitor into the combustor supports compact packaging that makes the gas turbine engines suitable for a number of applications for which previous designs were challenged. The use of supercharged combustor cooling promotes combustor durability and good airflow through the combustor. The integrated shaft fuel injection dispenses with the need for a separate fuel pump and contributes to the integration of the ignitor into a compact combustor package.

### Discussion of Possible Embodiments

The following are non-exclusive descriptions of possible embodiments of the present invention.

According to a first aspect of the invention, a gas turbine engine includes a compressor configured to receive inlet air at a compressor inlet and generate compressed air at a compressor exit, a combustor positioned fluidically and physically downstream of the compressor, a turbine positioned fluidically and physically downstream of the combustor, and a shaft mechanically connecting the turbine and the compressor. The combustor is fluidically connected to the compressor to receive a first portion of the compressed air as combustor primary inlet air and also includes a toroidal recirculation zone configured to receive and combust fuel in a rich combustion zone, an ignitor positioned to ignite an air/fuel mixture in the rich combustion zone, a rapid quench zone downstream of the toroidal recirculation zone, a lean combustion zone downstream of the rapid quench zone, and a cooling air flow path configured to direct a second portion of the compressed air around an outer combustor liner to cool the combustor liner and to provide a source of quench air, inner combustor liner cooling air, fuel injector air, and combustor secondary inlet air. The rapid quench zone is configured to receive and quench with quench air combustion products from the rich combustion zone. The lean combustion zone is configured to complete combustion of the fuel and to generate hot combustor exhaust gas. The turbine is fluidically connected to the compressor to receive the hot combustor exhaust gas. The shaft is configured to transmit rotational energy from the turbine to the compressor to power the compressor, and pump fuel from a fuel source to the combustor through a fuel duct in the shaft. The shaft connects the turbine to the compressor through an annulus formed by the combustor surrounding the shaft and also includes a shaft cooling air pump configured to further compress the second portion of the compressed air before the second portion of the compressed air enters the combustor as fuel injector air and combustor secondary inlet air.

The gas turbine engine of the preceding paragraph can optionally include, additionally and/or alternatively, any one or more of the following features, configurations and/or additional elements:
The gas turbine engine of the preceding paragraph, wherein the toroidal recirculation zone has a height that is roughly a height of the compressor inlet, for example, equal to or within 10% or 5% of a height of the compressor inlet.

The gas turbine engine of any of the preceding paragraphs, further comprising: a plurality of fuel injectors configured to direct fuel into the toroidal recirculation zone and onto a splash plate portion of the inner combustor liner as primary fuel flow, wherein the splash plate portion of the inner combustor liner is positioned upstream of the ignitor; a plurality of pre-diffuser deswirl vanes positioned in the cooling air flow path to interact with the second portion of the compressed air; and a plurality of combustor inlet deswirl vanes positioned in a combustor inlet to interact with the combustor primary inlet air and combustor secondary inlet air.

The gas turbine engine of any of the preceding paragraphs, wherein the fuel is injected from the rotating shaft and mixed with pressurized air to create a plurality of primary and secondary fuel flows to: direct fuel into the toroidal recirculation zone along a portion of the inner combustor liner immediately downstream of the plurality of fuel injectors as secondary fuel flow; and to direct fuel injector air into the toroidal recirculation zone with the primary fuel flow as primary fuel injector air and with the secondary fuel flow as secondary fuel injector air.

The gas turbine engine of any of the preceding paragraphs, wherein the combustor inlet deswirl vanes are positioned upstream of the ignitor and are configured to function as bluff bodies to create a quiescent flow zone downstream of the combustor inlet deswirl vanes.

The gas turbine engine of any of the preceding paragraphs, wherein the combustor inlet deswirl vanes are configured to provide structural support for the rich combustion zone of the combustor and the hollow 1st stage turbine vanes are configured to provide structural support for the lean combustion zone of the combustor.

The gas turbine engine of any of the preceding paragraphs, wherein the a rapid quench zone further comprises a plurality of inner diameter (ID) quench tubes to receive ID quench air and a plurality of outer diameter (OD) quench tubes to receive OD quench air.

The gas turbine engine of any of the preceding paragraphs, wherein the lean combustion zone further comprises a plurality of ID inner combustor liner cooling air tubes to receive ID inner combustor liner cooling air and a plurality of OD inner combustor liner cooling air tubes to receive OD inner combustor liner cooling air.

The gas turbine engine of any of the preceding paragraphs, further comprising: a plurality of hollow 1st stage turbine vanes positioned between the combustor and the turbine, wherein the hollow 1st stage turbine vanes are configured to remove the bulk circumferential swirl created in the lean combustion zone before the combustor exhaust gas enters the turbine; an aft bearing surrounding the shaft immediately upstream of the turbine, wherein the aft bearing is configured to provide structural support for the shaft when it rotates in operation; and a plurality of hollow struts positioned between the plurality of hollow 1^{st} stage turbine vanes and the aft bearing, wherein the plurality of struts are configured to provide structural support for the aft bearing.

The gas turbine engine of any of the preceding paragraphs, wherein the plurality of hollow 1st stage turbine vanes, the plurality of hollow struts, and the aft bearing are fluidically connected to the fuel flow path so that fuel can be thermally isolated form hot combustor gases and flow through at least one of the plurality of hollow 1st stage turbine vanes, at least one of the plurality of hollow struts, and the aft bearing when the engine is in operation.

According to another aspect of the invention, a combustor for a gas turbine engine includes a combustor liner that defines a perimeter of the combustor, wherein the combustor liner includes an inner combustor liner that defines an inner perimeter of the combustor that is exposed to combustion and an outer combustor liner that defines an outer perimeter of the combustor that is exposed to cooling air. The combustor is positioned fluidically and physically downstream of a compressor and is fluidically connected to the compressor to receive a first portion of compressed air as combustor primary inlet air and also includes a toroidal recirculation zone configured to receive and combust fuel in a rich combustion zone, an ignitor positioned to ignite an air/fuel mixture in the rich combustion zone, a rapid quench zone downstream of the toroidal recirculation zone, wherein the rapid quench zone is configured to receive and quench with quench air combustion products from the rich combustion zone, and a lean combustion zone downstream of the rapid quench zone, wherein the lean combustion zone is configured to complete combustion of the fuel and to generate hot combustor exhaust gas. The outer combustor liner further defines a cooling air flow path configured to direct a second portion of the compressed air around the outer combustor liner to cool the combustor liner and to provide a source of quench air, inner combustor liner cooling air, fuel injector air, and combustor secondary inlet air.

The combustor of the preceding paragraph can optionally include, additionally and/or alternatively, any one or more of the following features, configurations and/or additional elements:
The combustor of the preceding paragraph, wherein the toroidal recirculation zone has a height that is roughly a height of a compressor inlet of the gas turbine engine, for example, equal to or within 10% or 5% of a height of the compressor inlet.

The combustor of any of the preceding paragraphs, further comprising: a plurality of fuel injectors configured to direct fuel into the toroidal recirculation zone and onto a splash plate portion of the inner combustor liner as primary fuel flow, wherein the splash plate portion of the inner combustor liner is positioned upstream of the ignitor; a plurality of pre-diffuser deswirl vanes positioned in the cooling air flow path to interact with the second portion of the compressed air; and a plurality of combustor inlet deswirl vanes positioned in a combustor inlet to interact with the combustor primary inlet air and combustor secondary inlet air.

The combustor of any of the preceding paragraphs, wherein the plurality of fuel injectors are further configured to: direct fuel into the toroidal recirculation zone along a portion of the inner combustor liner immediately downstream of the plurality of fuel injectors as secondary fuel flow; and to direct fuel injector air into the toroidal recirculation zone with the primary fuel flow as primary fuel injector air and with the secondary fuel flow as secondary fuel injector air.

The combustor of any of the preceding paragraphs, wherein the combustor inlet deswirl vanes are positioned upstream of the ignitor and are configured to function as bluff bodies to create a quiescent flow zone downstream of the combustor inlet deswirl vanes.

The combustor of any of the preceding paragraphs, wherein the combustor inlet deswirl vanes are configured to provide structural support for the rich combustion zone of the combustor when the combustor is installed in the gas turbine engine.

The combustor of any of the preceding paragraphs, wherein the a rapid quench zone further comprises a plurality of inner diameter (ID) quench tubes to receive and direct ID quench air into the rapid quench zone and a plurality of outer diameter (OD) quench tubes to receive and direct OD quench air into the rapid quench zone.

The combustor of any of the preceding paragraphs, wherein the positioning of the ID quench tubes and OD quench tubes in the rapid quench zone is selected to fluidically isolate the rich combustion zone from the rapid quench zone.

The combustor of any of the preceding paragraphs, wherein the lean combustion zone further comprises a plurality of ID inner combustor liner cooling air nozzles to receive and direct ID inner combustor liner cooling air into the lean combustor zone and a plurality of OD inner combustor liner cooling air nozzles to receive and direct OD inner combustor liner cooling air into the lean combustor zone.

The combustor of any of the preceding paragraphs, wherein the combustor is configured to be manufactured using additive manufacturing (AM) techniques wherein a portion of the combustor liner that defines a perimeter of the toroidal recirculation zone is built in contact with an AM device build plate and the remaining portions of the combustor liner are built vertically on top of the portion of the combustor liner that is built in contact with the AM build plate.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A gas turbine engine (100a; 100b) comprising:
a compressor (102) configured to receive inlet air at a compressor inlet (102a) and generate compressed air (130) at a compressor exit (102b);
a combustor (104) positioned fluidically and physically downstream of the compressor (102), wherein the combustor (104) is fluidically connected to the compressor (102) to receive a first portion of the compressed air (130) as combustor primary inlet air (130a) and wherein the combustor (104) comprises:
a toroidal recirculation zone configured to receive and combust fuel in a rich combustion zone (104a);
an ignitor (118) positioned to ignite an air/fuel mixture in the rich combustion zone (104a);
a rapid quench zone (104b) downstream of the toroidal recirculation zone, wherein the rapid quench zone (104b) is configured to receive and quench with quench air (130d; 130h) combustion products from the rich combustion zone (104a);
a lean combustion zone (104c) downstream of the rapid quench zone (104b), wherein the lean combustion zone (104c) is configured to complete combustion of the fuel and to generate hot combustor exhaust gas (106); and
a cooling air flow path (124) configured to direct a second portion (130b) of the compressed air (130) around an outer combustor liner (140b) to cool the combustor liner (140) and to provide a source of quench air (130d; 130h), inner combustor liner cooling air (130g), fuel injector air (1301; 130j), and combustor secondary inlet air (130k);
a turbine (108) positioned fluidically and physically downstream of the combustor (104), wherein the turbine (108) is fluidically connected to the compressor (102) to receive the hot combustor exhaust gas (106);
a shaft (110) mechanically connecting the turbine (108) and the compressor (102), wherein the shaft (110) is configured to:
transmit rotational energy from the turbine (108) to the compressor (102) to power the compressor (102), and the shaft (110) connects the turbine (108) to the compressor (102) through an annulus formed by the combustor (104) surrounding the shaft (110); and
pump fuel from a fuel source (150) to the combustor (104) through a fuel duct (152a-e) in the shaft (110); and
a shaft cooling air pump (112) configured to further compress the second portion (130b) of the compressed air (130) before the second portion (130b) of the compressed air (130) enters the combustor (104) as fuel injector air (1301; 130j) and combustor secondary inlet air (130k).

2. The gas turbine engine (100a; 100b) of claim 1, wherein the toroidal recirculation zone has a height that is roughly a height of the compressor inlet (102a).

3. The gas turbine engine (100a; 100b) of claim 1 or 2, further comprising:
a plurality of fuel injectors (154) configured to direct fuel into the toroidal recirculation zone and onto a splash plate portion of the inner combustor liner (140a) as primary fuel flow (154a-1), wherein the splash plate portion of the inner combustor liner (140a) is positioned upstream of the ignitor (118);
a plurality of pre-diffuser deswirl vanes (120) positioned in the cooling air flow path (124) to interact with the second portion (130b) of the compressed air (130); and
a plurality of combustor inlet deswirl vanes (116) positioned in a combustor inlet (114) to interact with the combustor primary inlet air (130a) and combustor secondary inlet air (130k).

4. The gas turbine engine (100a; 100b) of claim 3, configured such that the fuel is injected from the rotating shaft (152) and mixed with pressurized air to create a plurality of primary and secondary fuel flows to:
direct fuel into the toroidal recirculation zone along a portion of the inner combustor liner (140a) immediately downstream of the plurality of fuel injectors (154) as secondary fuel flow (154b-1); and
direct fuel injector air (1301; 130j) into the toroidal recirculation zone with the primary fuel flow (154a-1) as primary fuel injector air (130i) and with the secondary fuel flow (154b-1) as secondary fuel injector air (130j).

5. The gas turbine engine (100a; 100b) of claim 3 or 4, wherein the combustor inlet deswirl vanes (116) are positioned upstream of the ignitor (118) and are configured to function as bluff bodies to create a quiescent flow zone downstream of the combustor inlet deswirl vanes (116).

6. The gas turbine engine (100a; 100b) of any of claims 3 to 5, wherein the combustor inlet deswirl vanes (116) are configured to provide structural support for the rich combustion zone (104a) of the combustor (104) and a plurality of hollow 1^{st} stage turbine vanes (128) are configured to provide structural support for the lean combustion zone (104c) of the combustor (104).

7. The gas turbine engine (100a; 100b) of any preceding claim, wherein the rapid quench zone (104b) further comprises a plurality of inner diameter (ID) quench tubes (126a) to receive ID quench air (130h) and a plurality of outer diameter (OD) quench tubes (126b) to receive OD quench air (130d).

8. The gas turbine engine (100a; 100b) of any preceding claim, wherein the lean combustion zone (104c) further comprises a plurality of ID inner combustor liner cooling air tubes to receive ID inner combustor liner cooling air (130g) and a plurality of OD inner combustor liner cooling air tubes to receive OD inner combustor liner cooling air (130e).

9. The gas turbine engine (100a; 100b) of any preceding claim, further comprising:
a or the plurality of hollow 1^{st} stage turbine vanes (128) positioned between the combustor (104) and the turbine (108), wherein the hollow 1^{st} stage turbine vanes (128) are configured to remove the bulk circumferential swirl created in the lean combustion zone (104c) before the combustor exhaust gas (106) enters the turbine (108);
an aft bearing (136) surrounding the shaft (110) immediately upstream of the turbine (108), wherein the aft bearing (136) is configured to provide structural support for the shaft (110) when it rotates in operation; and
a plurality of hollow struts (134) positioned between the plurality of hollow 1^{st} stage turbine vanes (128) and the aft bearing (136), wherein the plurality of struts (134) are configured to provide structural support for the aft bearing (136).

10. The gas turbine engine (100a; 100b) of claim 9, wherein the plurality of hollow 1^{st} stage turbine vanes (128), the plurality of hollow struts (134), and the aft bearing (136) are fluidically connected to the fuel flow path so that fuel can be thermally isolated from hot combustor gases and flow through at least one of the plurality of hollow 1^{st} stage turbine vanes (128), at least one of the plurality of hollow struts (134), and the aft bearing (136) when the engine is in operation.

11. A combustor (104) for a gas turbine engine (100a; 100b) comprising:
a combustor liner (140) that defines a perimeter of the combustor (104), wherein the combustor liner (140) includes an inner combustor liner (140a) that defines an inner perimeter of the combustor (104) that is exposed to combustion and an outer combustor liner (140b) that defines an outer perimeter of the combustor (104) that is exposed to cooling air;
wherein the combustor (104) is configured to be fluidically connected to a compressor (102) to receive a first portion of compressed air (130) as combustor primary inlet air (130a) and the combustor (104) further comprises:
a toroidal recirculation zone configured to receive and combust fuel in a rich combustion zone (104a);
an ignitor (118) positioned to ignite an air/fuel mixture in the rich combustion zone (104a);
a rapid quench zone (104b) downstream of the toroidal recirculation zone, wherein the rapid quench zone (104b) is configured to receive and quench with quench air (130d; 130h) combustion products from the rich combustion zone (104a); and
a lean combustion zone (104c) downstream of the rapid quench zone (104b), wherein the lean combustion zone (104c) is configured to complete combustion of the fuel and to generate hot combustor exhaust gas (106);
wherein the outer combustor liner (140b) further defines a cooling air flow path (124) configured to direct a second portion (130b) of the compressed air (130) around the outer combustor liner (140b) to cool the combustor liner (140) and to provide a source of quench air (130d; 130h), inner combustor liner cooling air (130g), fuel injector air (1301; 130j), and combustor secondary inlet air (130k),
optionally wherein:
the lean combustion zone (104c) further comprises a plurality of ID inner combustor liner cooling air nozzles to receive and direct ID inner combustor liner cooling air (130g) into the lean combustion zone (104c) and a plurality of OD inner combustor liner cooling air nozzles to receive and direct OD inner combustor liner cooling air (130e) into the lean combustor zone (104c).

12. The combustor (104) of claim 11, further comprising:
a plurality of fuel injectors (154) configured to direct fuel into the toroidal recirculation zone and onto a splash plate portion of the inner combustor liner (140a) as primary fuel flow (154a), wherein the splash plate portion of the inner combustor liner (140a) is positioned upstream of the ignitor (118);
a plurality of pre-diffuser deswirl vanes (120) positioned in the cooling air flow path (124) to interact with the second portion (130b) of the compressed air (130); and
a plurality of combustor inlet deswirl vanes (116) positioned in a combustor inlet (114) to interact with the combustor primary inlet air (130a) and combustor secondary inlet air (130k), optionally wherein:
the plurality of fuel injectors (154) are further configured to direct fuel into the toroidal recirculation zone along a portion of the inner combustor liner (140a) immediately downstream of the plurality of fuel injectors (154) as secondary fuel flow (154b), and to direct fuel injector air (130i; 130j) into the toroidal recirculation zone with the primary fuel flow (154a-1) as primary fuel injector air (130i) and with the secondary fuel flow (154b-1) as secondary fuel injector air (130j); and/or
the combustor inlet deswirl vanes (116) are positioned upstream of the ignitor (118) and are configured to function as bluff bodies to create a quiescent flow zone downstream of the combustor inlet deswirl vanes (116).

13. The combustor (104) of claim 12, wherein the combustor inlet deswirl vanes (116) are configured to provide structural support for the rich combustion zone (104a) of the combustor (104) when the combustor is installed in a gas turbine engine (100a; 100b).

14. The combustor (104) of any of claims 11 to 13, wherein the rapid quench zone (104b) further comprises a plurality of inner diameter (ID) quench tubes (126a) to receive and direct ID quench air (130h) into the rapid quench zone (104b) and a plurality of outer diameter (OD) quench tubes (126b) to receive and direct OD quench air (130d) into the rapid quench zone (104b), optionally wherein the positioning of the ID quench tubes (126a) and OD quench tubes (126b) in the rapid quench zone (104b) is selected to fluidically isolate the rich combustion zone (104a) from the rapid quench zone (104b).

15. The combustor (104) of any of claims 11 to 14, wherein the combustor (104) is configured to be manufactured using additive manufacturing (AM) techniques wherein a portion of the combustor liner (140) that defines a perimeter of the toroidal recirculation zone is built in contact with an AM device build plate and the remaining portions of the combustor liner (140) are built vertically on top of the portion of the combustor liner (140) that is built in contact with the AM build plate.
